# EUROPÄISCHE PATENTSCHRIFT

(11) **EP 1 087 898 B1**
(45) Veröffentlichungstag und Bekanntmachung des Hinweises auf die Patenterteilung: **26.02.2003**
(21) Anmeldenummer: 99931106.1
(22) Anmeldetag: 18.06.1999
(51) Int. Cl.: B65G 23/44, B65G 19/02

(54) **UMLENKEINRICHTUNG**
RETURN DEVICE
DISPOSITIF DE RENVOI

(30) Priorität: 18.06.1998 DE 29810942 U
(43) Veröffentlichungstag der Anmeldung: 04.04.2001
(73) Patentinhaber: WF Logistik GmbH, 86899 Landsberg (DE)
(72) Erfinder: BEYER, Rolf, Peter, D-86807 Buchloe (DE)
(74) Vertreter: Tiesmeyer, Johannes, Dipl.-Phys. Dr.
(86) Internationale Anmeldenummer: EP9904245
(87) Internationale Veröffentlichungsnummer: WO99065802

(56) Entgegenhaltungen:
- EP-A- 0 582 047
- DE-U- 29 709 481
- US-A- 3 647 050

## Beschreibung

Die Erfindung betrifft eine Umlenkeinrichtung mit einem ersten Umlenkelement zum Umlenken von Fördergutträgern und mit einem zweiten Umlenkelement zum Umlenken eines Endlos-Antriebsbandes für den Antrieb der Fördergutträger in einer eine Laufschienenführung für die Fördergutträger umfassenden Fördereinrichtung, insbesondere Hängefördereinrichtung, zum Transport der Fördergutträger längs einer Förderstrecke, wobei die Umlenkeinrichtung im installierten Zustand in der Fördereinrichtung eine von zwei voneinander beabstandeten Umlenkstationen bildet, um die herum das zur Bewegung angetriebene Endlos-Antriebsband als Schleife umläuft, und wobei das Endlos-Antriebsband im Streckenbereich von Umlenkstation zu Umlenkstation zur Mitnahme von Fördergutträgern längs der Förderstrecke geführt ist.

Eine Fördereinrichtung mit einer gattungsgemäßen Umlenkeinrichtung ist beispielsweise aus der EP 0 582 047 B1 bekannt. Bei dieser bekannten Fördereinrichtung handelt es sich um eine Hängefördereinrichtung mit wenigstens einer Förderschleife aus zwei endseitigen Umlenkeinrichtungen und Laufschienen für Geradeausfahrt im jeweiligen Förderstreckenbereich von Umlenkeinrichtung zu Umlenkeinrichtung. Die zu transportierenden Fördergutträger weisen jeweils einen in der Transportstellung im wesentlichen vertikal ausgerichteten Trägerkörper mit beidseitig davon abstehenden Laufrollen und mit einem unteren Haken zum Einhängen des zu transportierenden Förderguts auf. Bei Bewegung eines jeweiligen Fördergutträgers längs einer Laufschiene ist der Fördergutträger mit einer seiner Laufrollen an der Laufschiene seitlich hängend abgestützt, wobei er mit einem von dem Trägerkörper zur Laufschiene hin abstehenden Vorsprung unterhalb der Laufrolle mit einem Endlos-Reibband reibschlüssig in Antriebsverbindung steht. Das als Stahl-Flachband ausgebildete Endlos-Reibband ist mittels einer Führung an der Laufschiene zur Bewegung längs der Förderstrecke und zur reibschlüssigen Mitnahme betreffender Fördergutträger geführt. Bei den Umlenkeinrichtungen nach der EP 0 582 047 B1 handelt es sich um drehbare Umlenktrommeln mit vertikal verlaufenden Drehachsen. Im unteren Bereich weist jede der beiden Umienktrommeln als Element zur Umlenkung des Reibbandes eine flache Umfangsnut auf, in der das Endlos-Reibband bei seiner Umlenkung geführt ist. Oberhalb der Umfangsnut ist an jeder Umlenktrommel als Element für die Umlenkung von Fördergutträgern ein am Umfang umlaufender Förderflansch vorgesehen. Dieser Förderflansch dient dazu, Fördergutträger von einer betreffenden Laufschiene bei tangentialer Annäherung an die Umlenktrommel zu übernehmen und bei der Umlenkung entsprechend der Drehung der Umlenktrommel zu transportieren. Der Förderflansch greift hierzu in eine von zwei Seitenstegen begrenzte seitliche Nutdes betreffenden Fördergutträgers oberhalb der den Fördergutträger an der Laufschiene abstützenden Laufrolle ein, so daß schließlich der obere Seitensteg des Fördergutträgers auf der Oberseite des Förderstegs aufliegt und der Fördergutträger auf diese Weise an dem Fördersteg seitlich hängend zur Mitnahme durch die Umlenktrommel abgestützt ist. An der Umlenkeinrichtung kann ein als Weiche wirkender Umsetzer vorgesehen sein, der die Fördergutträger von der Umlenktrommel auf eine Förderstrecke einer anderen Förderschleife umsetzt. Sofern ein solche Umsetzer nicht vorhanden ist oder inaktiv geschaltet ist, werden die Fördergutträger von der Umlenktrommel um 180° umgelenkt und dann wieder an eine Laufschiene übergeben, um sie in Richtung zu der betreffenden anderen Umlenkeinrichtung zu bewegen.

Zum Antrieb des Endlos-Reibbandes wird üblicherweise eine der beiden Umlenktrommeln von einem Antriebsmotor rotierend angetrieben. Für eine möglichst schlupffreie Mitnahme des Endlos-Reibbandes durch die angetriebene Umlenktrommel ist es erforderlich, daß das Endlos-Reibband gespannt ist. Zur Gewährleistung einer zuverlässigen Funktion der Fördereinrichtung sollte sichergestellt sein, daß die Übernahme der betreffenden Fördergutträger von einer Laufschiene auf den Förderflansch der Umlenktrommel, die Umlenkung des Fördergutträgers und die darauffolgende Übergabe des Fördergutträgers an eine nächste Laufschiene an definierten Stellen der Förderstrecke erfolgt. Hierzu hat man bei den Fördereinrichtungen der in der EP 0 582 047 B1 beschriebenen Art die Umlenktrommeln nach Maßgabe der gewünschten Förderstrecke mit gleichbleibendem Abstand voneinander installiert und die Endlos-Reibbänder bei der Installation mit einer geeigneten Spannung eingestellt.

Aufgrund von Längenänderungen des Endlos-Reibbandes, beispielsweise infolge von Temperaturschwankungen, Verschleiß usw., kann jedoch das Problem eines vergrößerten Schlupfes zwischen Reibband und Umlenktrommel auftreten, insbesondere bei größerem Staudruck im Falle einer Fördereinrichtung, in der Fördergutträger wahlweise an einer Laufschiene gestaut werden können.

Der vorliegenden Erfindung liegt die Aufgabe zugrunde, eine Umlenkeinrichtung der eingangs genannten Art bereitzustellen, welche in einer betreffenden Fördereinrichtung, insbesondere Hängefördereinrichtung, eine Nachstellung der Spannung des Endlos-Antriebsbandes bei sich ändernden Betriebsbedingungen, etwa Temperaturschwankungen, ermöglicht, ohne die geometrischen Beziehungen der die Förderstrecke bildenden Elemente zueinander zu verändern.

Zur Lösung dieser Aufgabe wird erfindungsgemäß vorgeschlagen, daß zum Zwecke der Einstellung der Spannung des Endlos-Antriebsbandes das zweite Umlenkelement relativ zu dem ersten Umlenkelement verschiebbar zwischen einer ersten Stellung, nämlich einer Stellung verkleinerten Abstandes zu der anderen Umlenkstation, und einer zweiten Stellung, nämlich einer Stellung vergrößerten Abstandes zu der anderen Umlenkstation, an einer Halterung angeordnet ist.

Im Unterschied zu der aus der EP 0 582 047 B1 bekannten Umlenkeinrichtung nach dem Stand der Technik mit dem Förderflansch als Umlenkelement für die Fördergutträger und der Umfangsnut als Umlenkelement für das Endlos-Antriebsband an einer gemeinsamen Umlenktrommel sind bei der Umlenkeinrichtung nach der Erfindung das Umlenkelement für die Fördergutträger und das Umlenkelement für das Endlos-Antriebsband nicht mehr in bezug auf sämtliche Freiheitsgrade starr gekoppelt. Das Umlenkelement für das Endlos-Antriebsband kann relativ zu dem Umlenkelement für die Fördergutträger und zu der anderen Umlenkstation verschoben werden, um die Spannung des Endlos-Antriebsbandes einzustellen. Dabei wird an den geometrischen Beziehungen der die Förderstrecke bildenden Elemente relativ zueinander nichts geändert, so daß die Übergabepunkte für die Fördergutträger zwischen Laufschienenführung und erstem Umlenkelement an ihren definierten Stellen verbleiben.

Gemäß einer Ausführungsform kann es vorgesehen sein, daß das zweite Umlenkelement in seiner jeweiligen Verschiebestellung fixierbar an der Halterung angeordnet ist. In diesem Fall kann die Bandspannung jeweils manuell eingestellt werden, indem das zweite Umlenkelement in eine für die gewünschte Bandspannung geeignete Verschiebestellung verschoben und dann in dieser Verschiebestellung fixiert wird.

Gemäß einer bevorzugten Ausgestaltung weist die Umlenkeinrichtung jedoch eine Vorspanneinrichtung auf, die eine das zweite Umlenkelement zur zweiten Stellung hin federnd vorspannende Kraft auf das zweite Umlenkelement ausübt, um das Endlos-Antriebsband zu spannen. Das zweite Umlenkelement ist daher in seiner Verschiebeführung nicht starr fixiert, sondern durch die einander entgegenwirkenden Kräfte der Vorspanneinrichtung und des Endlos-Antriebsbandes in einer jeweiligen Verschiebestellung eingestellt, so daß das Endlos-Antriebsband stets eine gut definierte Spannung erfährt. Bei Längenausdehnung des Endlos-Antriebsbandes drückt die Vorspanneinrichtung das zweite Umlenkelement unter Beibehaltung der Spannung des Endlos-Antriebsbandes in Richtung zur zweiten Stellung. Bei einertemperaturbedingten Verkürzung des Endlos-Antriebsbandes kann das zweite Umlenkelement dann wieder in Richtung zu seiner ersten Stellung hin ausweichen, so daß eine zu große Bandspannung verhindert wird. Es können im Rahmen der Erfindung Mittel zur änderbaren Einstellung der Vorspannkraft der Vorspanneinrichtung vorgesehen sein.

Bei dem ersten Umlenkelement und bei dem zweiten Umlenkelement handelt es sich vorzugsweise um drehbar gelagerte Umlenkräder mit parallel zueinander verlaufenden Drehachsen, wobei die beiden Umlenkräder vorzugsweise an einer gemeinsamen Halterung angeordnet sind.

Das für die Umlenkung des Endlos-Antriebsbandes vorgesehene zweite Umlenkelement bzw. Umlenkrad ist zweckmäßigerweise an einem Schlitten drehbar gelagert, der in einer an der Halterung vorgesehenen Schlittenführung geführt ist, um das zweite Umlenkelement relativ zu dem ersten Umlenkelement verschiebbar zu lagern.

Vorzugsweise hat die Vorspanneinrichtung eine Vorspannfeder zur Erzeugung der Vorspannkraft, wobei die Vorspannfeder zwischen der Halterung und dem Schlitten wirkt, um das zweite Umlenkelement zur zweiten Stellung hin vorzuspannen. Mit einer derartigen Vorspannfeder kann die Vorspanneinrichtung konstruktiv einfach aufgebaut werden. Alternativ könnte auch eine Vorspanneinrichtung Einsatz finden, bei der die Vorspannkraft beispielsweise mit pneumatischen Mitteln erzeugt wird.

Bei dem Endlos-Antriebsband handelt es sich vorzugsweise um ein Reibband zur reibschlüssigen Mitnahme der Fördergutträger, wie es beispielsweise aus der EP 0 582 047 B1 bekannt ist.

In einer alternativen Ausführungsform der Umlenkeinrichtung für eine Fördereinrichtung mit Kettenantrieb handelt es sich bei dem Endlos-Antriebsband um eine Antriebskette, die die Fördergutträger formschlüssig in Eingriff nehmen kann.

Vorzugsweise sind die beiden Umlenkräder durch eine Kopplungseinrichtung zur gemeinsamen Drehung miteinander gekoppelt, wobei die Kopplungseinrichtung eine radiale Führung an einem der Umlenkräder und ein in die radiale Führung relativ dazu verschiebbar eingreifendes Kopplungselement an dem anderen Umlenkrad aufweist. Das Umlenkrad für die Fördergutträger wird auf diese Weise bei der Drehung des Umlenkrades für das Endlos-Antriebsband zur gemeinsamen Drehung mitgenommen, wobei aufgrund der Verschiebbarkeit des Kopplungselementes in der radialen Führung ein Ausgleich bezüglich der Exzentrizität der Achsen der beiden Umlenkräder stattfinden kann. Die Kopplungseinrichtung funktioniert daher auch dann, wenn das zweite Umlenkrad nicht koaxial zu dem ersten Umlenkrad liegt, weil es von der Vorspanneinrichtung relativ zu dem ersten Umlenkrad verschoben worden ist.

Die erfindungsgemäße Umlenkeinrichtung ist insbesondere in einer Hängefördereinrichtung der in der EP 0 582 047 B1 bekannten Art als Ersatz für eine Umlenktrommel verwendbar.
- Fig. 1 a: zeigt eine Umlenkeinrichtung nach der Erfindung in teils geschnittener Darstellung, wobei das erste Umlenkelement in seiner ersten Stellung ist.
- Fig. 1b: zeigt die Umlenkeinrichtung nach Fig. 1a in einer entsprechenden Darstellung, wobei das zweite Umlenkelement in seiner zweiten Stellung ist.
- Fig. 2: zeigt in einer perspektivischen Teildarstellung eine Fördereinrichtung nach dem Stand der Technik, in der die Umlenkeinrichtung nach den Fig. 1a und 1b anstelle einer Umlenktrommel verwendbar ist.
- Fig. 3: zeigt einen Fördergutträger an einer Laufschiene der Fördereinrichtung nach Fig. 2, wobei die Laufschiene nur teilweise und in einer Schnittdarstellung mit der in Fig. 2 bei IV - IV angedeuteten Schnittebene gezeigt ist.

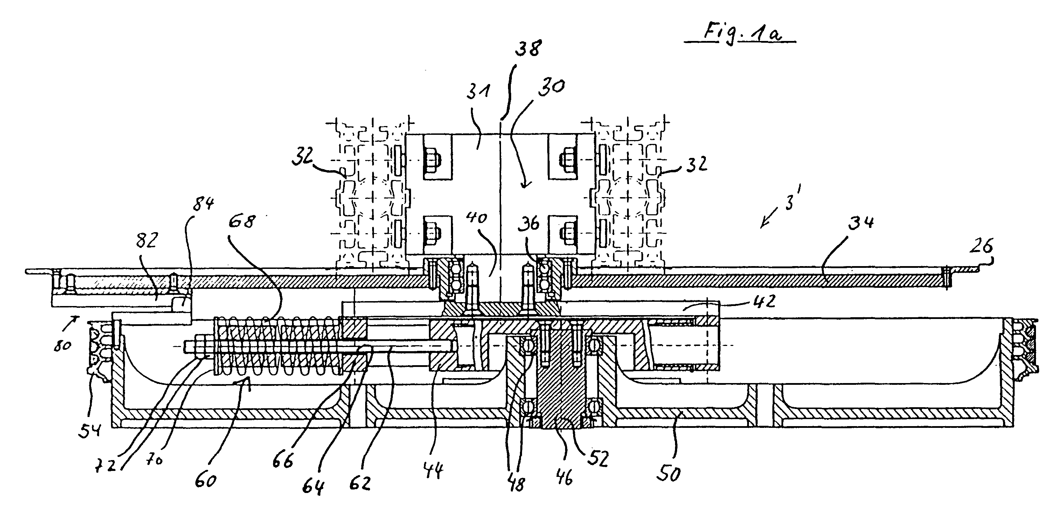

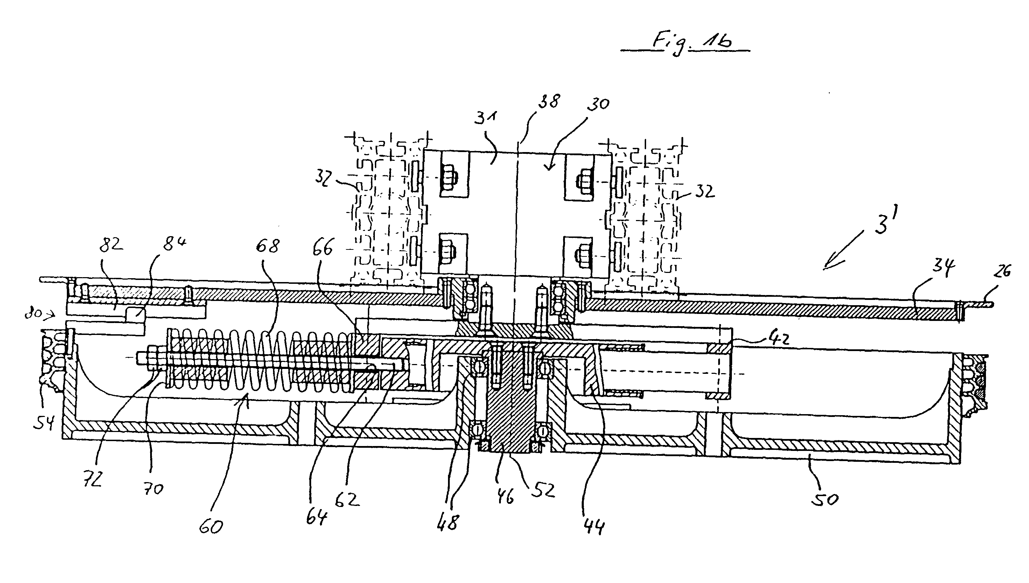

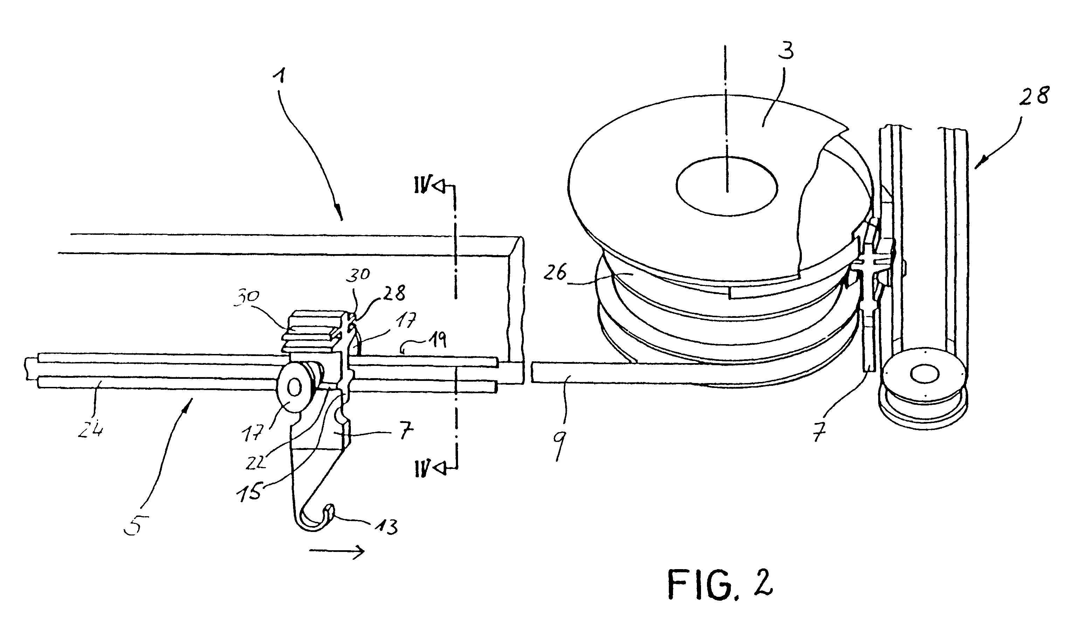

In Fig. 2 ist ein Ausschnitt einer Hängefördereinrichtung dargestellt, wie sie aus der EP 0 582 047 B1 bekannt ist und in der die Umlenkeinrichtung 3' nach den Fig. 1a und 1b anstelle der in Fig. 2 gezeigten Umlenktrommel 3 zum Einsatz kommen kann.

Die Fördereinrichtung zum Transport von Fördergutträgern 7 nach Fig. 2 umfaßt einen ersten Förderkreis 1 in Form einer länglichen Förderschleife mit zwei Umlenktrommeln 3 und mit Laufschienen 5 in den Geradeaus-Streckenbereichen zwischen den Umlenktrommeln 3. In Fig. 2 sind von dem Förderkreis 1 lediglich die in bezug auf die Betrachtungsrichtung rechts liegende Umlenkrolle 3 und die in bezug auf die Betrachtungsrichtung vorne liegende Laufschiene 5 dargestellt. Der Förderkreis 1 weist auf der der Umlenktrommel links gegenüberliegenden Seite eine weitere Umlenktrommel und rückseitig der Laufschiene 5 eine weitere entsprechende Laufschiene auf.

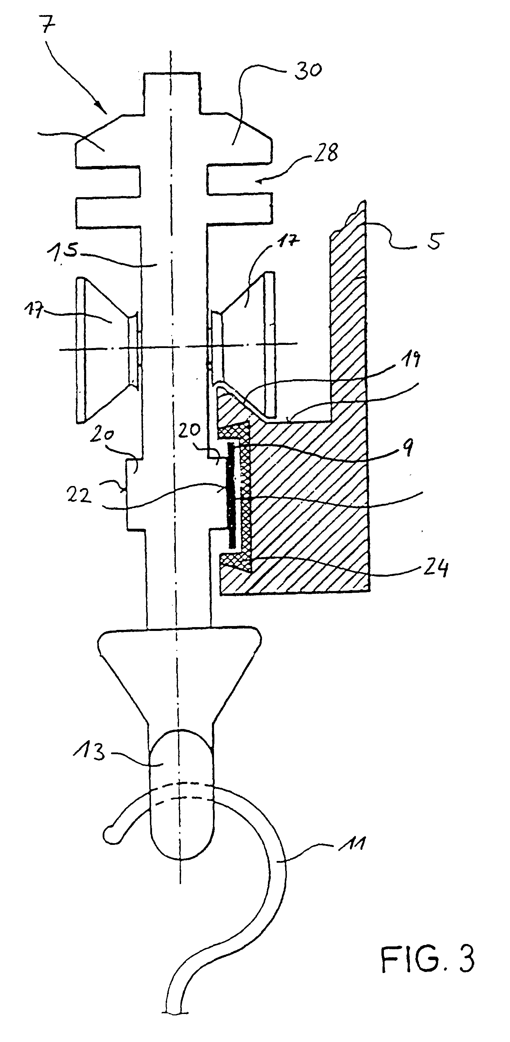

Bei den zu transportierenden Fördergutträgern 7 handelt es sich im Beispielsfall um sogenannte Bügelträger zum Transport von an Kleiderbügeln hängenden Kleidungsstücken. Wie in Fig. 3 angedeutet, kann der Haken 11 eines Kleiderbügels in den unteren Haken 13 des Fördergutträgers 7 eingehängt werden. Der Fördergutträger 7 hat einen im wesentlichen vertikal ausgerichteten Trägerkörper 15 mit zwei an den einander entgegengesetzten Lateralseiten des Trägerkörpers 15 abstehenden Laufrollen 17.

Während der Bewegung längs einer Laufschiene 5 stützt sich der Fördergutträger 7 mit jeweils einer Laufrolle 17 an einer Lauffläche 19 der Laufschiene 5 ab, so daß er seitlich an der Laufschiene 5 abgehängt und in Längsrichtung der Laufschiene 5 geführt ist. Unterhalb der Laufrollen 17 ist jeweils ein seitlicher Vorsprung 20 mit einer äußeren Reibfläche 22 an dem Trägerkörper 15 vorgesehen. In Fig. 3 steht der auf der rechten Seite des Trägerkörpers 15 liegende Vorsprung 20 mit seiner Reibfläche 22 an dem mittels der Führung 24 in Längsrichtung der Laufschiene 5 geführten Reibband 9 reibschlüssig an, so daß das Reibband 9 den Fördergutträger 7 zur Bewegung längs der Laufschiene 5 mitnimmt.

Die in Fig. 2 abgebrochen dargestellte Laufschiene 5 ist mit ihrem rechten Ende nahe an die Umlenktrommel 3 herangeführt, so daß der mit 26 gekennzeichnete Förderflansch an der Umlenktrommel 3 in die seitliche Nut 28 eines sich der Umlenktrommel 3 nähernden Fördergutträgers 7 eingreifen kann, um den Fördergutträger 7 von der Laufschiene 5 zu übernehmen. Dabei stützt sich der Fördergutträger mit einem die Nut 28 oben begrenzenden Dachsteg 30 an der Oberseite des Förderflansches 26 ab. Der Fördergutträger 7 wird dann entsprechend der Drehung der Umlenktrommel 3 umgelenkt. Eine hier nicht näher erläuterte, ortsfest angeordnete Bogenschiene hintergreift den oberen Endabschnitt des Fördergutträgers 7 während der Umlenkbewegung, um den Fördergutträger gegen radiales Abrutschen von dem Fördersteg 26 zu sichern. Gemäß Fig. 2 kann ein von der Umlenktrommel 3 aufgenommener Fördergutträger 7 mittels einer (nicht näher erläuterten) Weicheneinrichtung wahlweise an einen zweiten Förderkreis 28 übergeben werden, der vom Prinzip her wie der erste Förderkreis 1 ausgebildet sein kann.

Für den störungsfreien Betrieb der Fördereinrichtung kommt es darauf an, daß die Übergabestellen für den Fördergutträger 7 zwischen der Laufschiene 5 und der Umlenktrommel 3 bzw. zwischen der Umlenktrommel 3 und dem zweiten Förderkreis 28 definierte geometrische Positionen haben. Die Umlenktrommeln 3 und die Laufschienen 5 sollten daher in gleichbleibenden geometrischen Beziehungen zueinander angeordnet bleiben, wobei das Endlos-Reibband 9 hinreichend gespannt sein sollte, um Schlupf zwischen Reibband 9 und Umlenktrommeln 3 zu vermeiden. Zum Antrieb des Reibbandes 9 wird eine der Umlenktrommeln 3 von einer (nicht gezeigten) Antriebseinrichtung rotierend angetrieben, so daß sie das Reibband 9 bei ihrer Drehung reibschlüssig vorantreibt.

Wie bereits angesprochen, können Wärmeausdehnungseffekte und/oder Verschleißerscheinungen zur Änderung der Spannung des Reibbandes 9 führen, so daß das Reibband 9 Schlupfneigung aufweist. Aufgrund des unveränderlichen Abstandes zwischen den von dem Reibband 9 umgebenen Umlenktrommeln 3 konnte diesem Problem bei der bekannten Fördereinrichtung nach Fig. 2 nur begrenzt begegnet werden.

Dieses Problem kann jedoch überwunden werden, wenn wenigstens eine der Umlenktrommeln 3 durch eine Umlenkeinrichtung nach der Erfindung, beispielsweise durch die Umlenkeinrichtung 3' gemäß Fig. 1a und 1b, ersetzt wird.

Die Umlenkeinrichtung 3' nach den Fig. 1 a und 1 b weist eine Halterung 30 auf, die mit ihrem oberen Kopfteil 31 an Trägerprofilschienen 32 befestigt ist. Unterhalb des Kopfteils 31 ist als erstes Umlenkelement ein Umlenkrad 34 zum Umlenken von Fördergutträgern 7 an der Halterung 30 mittels der Wälzlager 36 drehbar um die vertikale Drehachse 38 gelagert. Das Umlenkrad 34 hat einen Umfangsflansch 26, der entsprechend der Funktion des Förderflansches 26 der Umlenktrommel 3 in Fig. 2 zur Eingriffnahme von Fördergutträgern 7 und zur Mitnahme der Fördergutträger 7 bei der Drehung des Umlenkrades 34 vorgesehen ist.

Der sich axial durch das Umlenkrad 34 erstreckende Zapfen 40 der Halterung 30 weist an seinem unteren Ende eine Schlittenführung 42 auf, in der ein Schlitten 44 zwischen der in Fig. 1 a gezeigten rechten Endstellung und der in Fig. 1b gezeigten linken Endstellung linear verschiebbar geführt ist. An der Unterseite des Schlittens ist ein Lagerzapfen 46 mit Wälzlagern 48 für ein zweites Umlenkrad 50 vorgesehen. Das zweite Umlenkrad 50 ist um die Drehachse 52 drehbar gelagert und dient zum Umlenken eines Endlos-Reibbandes, wie es in Fig. 2 mit 9 bezeichnet ist. Zur Führung des Endlos-Reibbandes 9 ist am Umfang des zweiten Umlenkrades 50 ein Kunststoff-Führungskörper 54 mit einer Umfangsnut für das Reibband 9 befestigt. Die Umlenkeinrichtung 3' mit der Ausrichtung gemäß Fig. 1 a und 1b wäre in der Fördereinrichtung nach Fig. 2 so zu installieren, daß sie die der gezeigten Umlenktrommel 3 auf der linken Seite gegenüberliegende Umlenktrommel (nicht gezeigt) ersetzte, so daß das Endlos-Reibband 9 jeweils über den links liegenden Bereich des Umfangs des Umlenkrades 50 in den Fig. 1a und 1b gespannt ist.

Eine Vorspanneinrichtung 60 stellt sicher, daß das Umlenkrad 50 in Richtung zu der in Fig. 1b gezeigten Stellung hin gegen das Reibband 9 federnd vorgespannt ist. Die Vorspanneinrichtung 60 weist eine Zug/Schubstange 62 auf, die in einer horizontalen Bohrung 64 der linken Seitenwand 66 der Schlittenführung 42 verschiebbar gelagert und mit ihrem in den Fig. 1 a und 1 b rechts liegenden Ende an dem Schlitten 44 befestigt ist. Eine von der Zug/Schubstange 62 axial durchsetzte Druckfeder 68, die im Beispielsfall als Schraubenfeder ausgebildet ist, stützt sich einerseits an der vertikalen Seitenwand 66 der Schlittenführung 42 und andererseits an einem Federteller 70 ab, der auf dem linken Endabschnitt der Schubstange 62 sitzt und von der Druckfeder 68 gegen die Einstellschrauben 72 gedrückt wird. Die Druckfeder 68 übt somit eine in den Fig. 1a und 1b nach links gerichtete Kraft auf die Schubstange 62 aus, um den Schlitten 44 und das daran drehbar gelagerte Umlenkrad 50 in Richtung zu der in Fig. 1b gezeigten Endstellung zu drücken. Dabei wird das Umlenkrad 50 stets gegen das umlaufende Endlos-Reibband vorgespannt.

Die Spannung der Feder 68 kann durch axiales Justieren des Federtellers 70 mittels der Einstellschrauben 72 bedarfsweise eingestellt werden.

Im installierten Zustand der Umlenkeinrichtung 3' innerhalb der Fördereinrichtung befindet sich der Schlitten 44 normalerweise zwischen den beiden Endstellungen gemäß Fig. 1a und 1b, so daß er im Falle einer Längenausdehnung des Endlos-Reibbandes 9 in Richtung zu der in Fig. 1b gezeigten zweiten Stellung hin unter der Kraft der Druckfeder 68 und unter Aufrechterhaltung der Spannung des Endlos-Reibbandes 9 ausrücken kann. Erfährt das Endlos-Reibband 9 eine Verkürzung, beispielsweise bei Absenkung der Umgebungstemperatur, so kann der Schlitten 44 unter der von dem Endlos-Reibband 9 auf das Umlenkrad 50 ausgeübten und der Kraft der Druckfeder 68 entgegenwirkenden Kraft in Richtung zu der in Fig. 1 a gezeigten Stellung hin ausweichen. Aufgrund dieser Ausweichbewegung des Schlittens 44 und des daran drehbar gelagerten Umlenkrades 50 wird sichergestellt, daß das Endlos-Reibband 9 in der für den zuverlässigen Betrieb der Fördereinrichtung optimalen Weise gespannt bleibt. Das Endlos-Reibband 9 kann somit keine zu hohe, die Drehlager und die Halterung übermäßig belastende Spannung auf die Umlenkeinrichtung 3' ausüben.

Bei der Umlenkeinrichtung 3' nach den Fig. 1a und 1b wird das Umlenkrad 50 während des Förderbetriebs in einer Fördereinrichtung von dem bewegten Endlos-Reibband 9 reibschlüssig zur Drehung angetrieben.

Eine Kopplungseinrichtung 80 sorgt dafür, daß sich das erste Umlenkrad 34 synchron mit dem zweiten Umlenkrad 50 dreht. Die Kopplungseinrichtung 80 weist an der Unterseite des ersten Umlenkrades 34 einen radialen Führungsschlitz 82 auf, in den ein an der Oberseite des zweiten Umlenkrades 50 nach oben abstehendes Mitnehmerelement 84 eingreift. Während der gemeinsamen Drehung der Umlenkräder 34, 50 kann das Mitnehmerelement 84 in dem Führungsschlitz 82 radiale Ausweichbewegungen relativ zu dem Führungsschlitz 82 ausführen. Diese Ausweichbewegungen ergeben sich aufgrund der normalerweise vorliegenden Exzentrizität der parallel zueinander verlaufenden Drehachsen 38 und 52 der Umlenkräder 34 und 50.

Das erste Umlenkrad 34 wird daher unabhängig von der jeweiligen Verschiebestellung des Schlittens 44 und des daran drehbar gelagerten zweiten Umlenkrades 50 von dem Mitnehmerelement 84 zur gemeinsamen Drehung mit dem zweiten Umlenkrad 50 mitgenommen. Da das erste Umlenkrad 34 unabhängig von der jeweiligen Verschiebestellung des zweiten Umlenkrades 50 an seinem definierten Installationsort innerhalb der Fördereinrichtung verbleibt, kann es Fördergutträger 7 an definierten Übernahmestellen von betreffenden Laufschienen aufnehmen bzw. an definierten Übergabestellen an betreffende Laufschienen abgeben. Das Endlos-Reibband 9 hat stets eine optimale Spannung für einen störungsfreien Förderbetrieb der Fördereinrichtung.

## Patentansprüche

1. Umlenkeinrichtung mit einem ersten Umlenkelement (34) zum Umlenken von Fördergutträgern (7) und einem zweiten Umlenkelement (50) zum Umlenken eines Endlos-Antriebsbandes (9) für den Antrieb der Fördergutträger (7) in einer eine Laufschienenführung (5, 19) für die Fördergutträger (7) umfassenden Fördereinrichtung, insbesondere Hängefördereinrichtung, zum Transport der Fördergutträger (7) längs einer Förderstrecke,
wobei die Umlenkeinrichtung (3') im installierten Zustand in der Fördereinrichtung eine von zwei voneinander beabstandeten Umlenkstationen (3', 3) bildet, um die herum das zur Bewegung angetriebene Endlos-Antriebsband (9) als Schleife umläuft, und wobei das Endlos-Antriebsband (9) im Streckenbereich von Umlenkstation (3') zu Umlenkstation (3) zur Mitnahme von Fördergutträgern (7) längs der Förderstrecke geführt ist,
**dadurch gekennzeichnet,**
**daß** zum Zwecke der Einstellung der Spannung des Endlos-Antriebsbandes (9) das zweite Umlenkelement (50) relativ zu dem ersten Umlenkelement (34) verschiebbar zwischen einer ersten Stellung, nämlich einer Stellung verkleinerten Abstandes zu der anderen Umlenkstation (3), und einer zweiten Stellung, nämlich einer Stellung vergrößerten Abstandes zu der anderen Umlenkstation (3), an einer Halterung (30) angeordnet ist.

2. Umlenkeinrichtung nach Anspruch 1, **dadurch gekennzeichnet, daß** das zweite Umlenkelement in seiner jeweiligen Verschiebestellung fixierbar an der Halterung angeordnet ist.

3. Umlenkeinrichtung nach Anspruch 1, **dadurch gekennzeichnet, daß** die Umlenkeinrichtung (3') eine Vorspanneinrichtung (60) aufweist, die eine das zweite Umlenkelement (50) zur zweiten Stellung hin federnd vorspannende Kraft auf das zweite Umlenkelement (50) ausübt, um das Endlos-Antriebsband (9) zu spannen.

4. Umlenkeinrichtung nach Anspruch 1, 2 oder 3, **dadurch gekennzeichnet, daß** es sich bei dem ersten Umlenkelement (34) und bei dem zweiten Umlenkelement (50) um drehbar gelagerte Umlenkräder mit parallel zueinander verlaufenden Drehachsen (38, 52) handelt.

5. Umlenkeinrichtung nach Anspruch 4, **dadurch gekennzeichnet, daß** die beiden Umlenkräder (34, 50) an einer gemeinsamen Halterung (30) angeordnet sind.

6. Umlenkeinrichtung nach einem der vorhergehenden Ansprüche, **dadurch gekennzeichnet, daß** das für die Umlenkung des Endlos-Antriebsbandes (9) vorgesehene zweite Umlenkelement (50) an einem Schlitten (44) angeordnet ist, der in einer an der Halterung (30) vorgesehenen Schlittenführung (42) geführt ist, um das zweite Umlenkelement (50) relativ zu dem ersten Umlenkelement (34) verschiebbar zu lagern.

7. Umlenkeinrichtung nach Anspruch 3 oder einem der Ansprüche 4 - 6, letztere, soweit sie direkt oder indirekt auf Anspruch 3 rückbezogen sind, **dadurch gekennzeichnet, daß** die Vorspanneinrichtung (60) eine Vorspannfeder (68) zur Erzeugung der Vorspannkraft aufweist.

8. Umlenkeinrichtung nach Anspruch 6 und 7, **dadurch gekennzeichnet, daß** die Vorspannfeder zwischen der Halterung (30) und dem Schlitten (44) wirkt, um das zweite Umlenkelement (50) zur zweiten Stellung hin vorzuspannen.

9. Umlenkeinrichtung nach einem der vorhergehenden Ansprüche, **dadurch gekennzeichnet, daß** es sich bei dem Endlos-Antriebsband (9) um ein Reibband zur reibschlüssigen Mitnahme der Fördergutträger (7) handelt.

10. Umlenkeinrichtung nach einem der Ansprüche 1 - 8, **dadurch gekennzeichnet, daß** es sich bei dem Endlos-Antriebsband um eine Förderkette handelt, mit der die Fördergutträger in Antriebsverbindung bringbar sind.

11. Umlenkeinrichtung nach Anspruch 4 oder einem der Ansprüche 5 - 10, letztere soweit sie direkt oder indirekt auf Anspruch 4 rückbezogen sind, **gekennzeichnet durch** eine die beiden Umlenkräder (34, 50) zur gemeinsamen Drehung koppelnde Kopplungseinrichtung (80).

12. Umlenkeinrichtung nach Anspruch 11, **dadurch gekennzeichnet, daß** die Kopplungseinrichtung (80) eine radiale Führung (82) an einem der Umlenkräder (34, 50) und ein in die radiale Führung (82) relativ dazu verschiebbar eingreifendes Kopplungselement (84) an dem anderen Umlenkrad (50, 34) aufweist.

## Claims

1. A deflecting arrangement having a first deflecting element (34) for deflecting conveyable-article carriers (7), and having a second deflecting element (50) for deflecting an endless drive belt (9) for driving the conveyable-article carriers (7) in a conveying arrangement, in particular overhead conveying arrangement, which comprises a running-rail guide (5, 19) for the conveyable-article carriers (7) and is intended for transporting the conveyable-article carriers (7) along a conveying route, the deflecting arrangement (3'), in the installed state in the conveying arrangement, forming one of two spaced-apart deflecting stations (3', 3) around which the endless drive belt (9), which is driven for movement, runs as a loop, and the endless drive belt (9) being guided along the route region from deflecting station (3') to deflecting station (3) for carrying along conveyable-article carriers (7) along the conveying route, **characterized in that**, for the purpose of adjusting the tensioning of the endless drive belt (9), the second deflecting element (50) is arranged on a mount (30) such that it can be displaced relative to the first deflecting element (34) between a first position, namely a position of reduced distance from the other deflecting station (3), and a second position, namely a position of increased distance from the other deflecting station (3).

2. The deflecting arrangement as claimed in claim 1, **characterized in that** the second deflecting element is arranged on the mount such that it can be fixed in its respective displacement position.

3. The deflecting arrangement as claimed in claim 1, **characterized in that** the deflecting arrangement (3') has a prestressing arrangement (60) which subjects the second deflecting element (50) to a force which resiliently prestresses the second deflecting element (50) in the direction of the second position, in order to tension the endless drive belt (9).

4. The deflecting arrangement as claimed in claim 1, 2 or 3, **characterized in that** the first deflecting element (34) and the second deflecting element (50) are rotatably mounted deflecting wheels with mutually parallel axes of rotation (38, 52).

5. The deflecting arrangement as claimed in claim 4, **characterized in that** the two deflecting wheels (34, 50) are arranged on a common mount (30).

6. The deflecting arrangement as claimed in one of the preceding claims, **characterized in that** the second deflecting element (50), which is provided for deflecting the endless drive belt (9), is arranged on a carriage (44) which is guided in a carriage guide (42) provided on the mount (30), in order to mount the second deflecting element (50) displaceably relative to the first deflecting element (34).

7. The deflecting arrangement as claimed in claim 3 or one of claims 4-6, insofar as the latter relate back directly or indirectly to claim 3, **characterized in that** the prestressing arrangement (60) has a prestressing spring (68) for producing the prestressing force.

8. The deflecting arrangement as claimed in claims 6 and 7, **characterized in that** the prestressing spring acts between the mount (30) and the carriage (44) in order to prestress the second deflecting element (50) in the direction of the second position.

9. The deflecting arrangement as claimed in one of the preceding claims, **characterized in that** the endless drive belt (9) is a friction belt for carrying along the conveyable-article carriers (7) with a friction fit.

10. The deflecting arrangement as claimed in one of claims 1-8, **characterized in that** the endless drive belt is a conveying chain with which the conveyable-article carriers can be brought into drive connection.

11. The deflecting arrangement as claimed in claim 4 or one of claims 5-10, insofar as the latter relate back directly or indirectly to claim 4, **characterized in that** it comprises a coupling arrangement (80) which couples the two deflecting wheels (34, 50) for joint rotation.

12. The deflecting arrangement as claimed in claim 11, **characterized in that** the coupling arrangement (80) has a radial guide (82) on one of the deflecting wheels (34, 50) and a coupling element (84), which engages in the radial guide (82) in a displaceable manner relative to the same, on the other deflecting wheel (50, 34).

## Revendications

1. Dispositif de renvoi comportant un premier élément de renvoi (34), destiné à renvoyer des supports de produits à transporter (7), et un deuxième élément de renvoi (50) destiné à renvoyer une bande d'entraînement sans fin (9) destinée à entraîner les supports de produits à transporter (7) grâce à un dispositif de transport, en particulier un dispositif de transport suspendu, comprenant un guidage de glissières (5, 19) pour les supports de produits à transporter (7), destiné à transporter les supports de produits à transporter (7) le long d'une voie de transport,
le dispositif de renvoi (3'), lorsqu'il est installé dans le dispositif de transport, constituant un des deux postes de renvoi (3, 3'), espacés l'un de l'autre, autour desquels la bande d'entraînement sans fin (9) mise en mouvement passe en formant une boucle et la bande d'entraînement sans fin (9) étant guidée d'un poste de renvoi (3') à l'autre (3) pour entraîner les supports de produits (7) à transporter le long de la voie de transport,
**caractérisé en ce qu'**
afin d'ajuster la tension de la bande d'entraînement sans fin (9), le deuxième élément de renvoi (50) est monté, par rapport au premier élément de renvoi (34), sur un support (30), de manière à pouvoir être déplacé entre une première position, à savoir une position dans laquelle son écart avec l'autre poste de renvoi (3) est réduit, et une deuxième position, à savoir une position dans laquelle son écart avec l'autre poste de renvoi (3) est augmenté.

2. Dispositif de renvoi selon la revendication 1, **caractérisé en ce que** le deuxième élément de renvoi est monté sur le support en étant susceptible d'être maintenu dans sa position déplacée.

3. Dispositif de renvoi selon la revendication 1, **caractérisé en ce que** le dispositif de renvoi (3') présente un dispositif de précontrainte (60) qui exerce, sur le deuxième élément de renvoi (50) une force précontraignant élastiquement le deuxième élément de renvoi (50) dans la deuxième position, afin de tendre la bande d'entraînement sans fin (9).

4. Dispositif de renvoi selon la revendication 1, 2 ou 3, **caractérisé en ce que** le premier élément de renvoi (34) et le deuxième élément de renvoi (50) sont des roues de renvoi montées tournantes, avec des axes (38, 52) s'étendant parallèlement les uns aux autres.

5. Dispositif de renvoi selon la revendication 4, **caractérisé en ce que** les deux roues de renvoi (34, 50) sont montées sur un support commun (30).

6. Dispositif de renvoi selon l'une des revendications précédentes, **caractérisé en ce que** le deuxième élément de renvoi (50), qui est prévu pour le renvoi de la bande d'entraînement sans fin (9), est monté sur un chariot (44) monté dans un élément de guidage de chariot (42) prévu sur le support (30), afin que le deuxième élément de renvoi (50) soit mobile par rapport au premier élément de renvoi (34).

7. Dispositif de renvoi selon la revendication 3 ou l'une des revendications 4 à 6, dans la mesure où cette dernière est rattachée directement ou indirectement à la revendication 3, **caractérisé en ce que** le dispositif de précontrainte (60) présente un ressort de précontrainte (68) destiné à exercer la force de précontrainte.

8. Dispositif de renvoi selon les revendications 6 et 7, **caractérisé en ce que** le ressort de précontrainte agit entre le support (30) et le chariot (44) pour précontraindre le deuxième élément de renvoi (50) dans la deuxième position.

9. Dispositif de renvoi selon l'une des revendications précédentes, **caractérisé en ce que** la bande d'entraînement sans fin (9) est une bande à friction destinée à entraîner par friction les supports de produits à transporter (7).

10. Dispositif de renvoi selon l'une des revendications 1 à 8, **caractérisé en ce que** la bande d'entraînement sans fin est une chaîne de transport grâce à laquelle les supports de produits à transporter peuvent être mis en liaison d'entraînement.

11. Dispositif de renvoi selon la revendication 4 ou l'une des revendications 5 à 10, dans la mesure où cette dernière est rattachée directement ou indirectement à la revendication 4, **caractérisé par** un dispositif de couplage (80) couplant les deux roues de renvoi (34, 50) afin qu'elles tournent ensemble.

12. Dispositif de renvoi selon la revendication 11, **caractérisé en ce que** le dispositif de couplage (80) comprend un élément de guidage radial (82) présent sur l'une des roues de renvoi (34, 50) et un élément de couplage (84), présent sur l'autre roue de renvoi (50, 34), pénétrant dans l'élément de guidage radial (82) en étant mobile par rapport à celui-ci.
